Europäisches Patentamt

European Patent Office

Office européen des brevets

(11) Numéro de publication: **0 335 853**
**A1**

(12) **DEMANDE DE BREVET EUROPEEN**

(21) Numéro de dépôt: **89870043.0**

(22) Date de dépôt: **24.03.89**

(51) Int. Cl.⁴: **A 01 D 51/00**
A 01 D 33/10

(30) Priorité: **29.03.88 BE 8800361**

(43) Date de publication de la demande:
**04.10.89 Bulletin 89/40**

(84) Etats contractants désignés:
**AT BE CH DE ES FR GB IT LI NL**

(71) Demandeur: **Mambour, Georges**
**rue Eugène Gilles, 90**
**B-6310 les Bons Villers (Frasnes lez Gosselies) (BE)**

(72) Inventeur: **Mambour, Georges**
**rue Eugène Gilles, 90**
**B-6310 les Bons Villers (Frasnes lez Gosselies) (BE)**

(54) **Machine à benne basculante pour la moisson de tubercules.**

(57) Machine à benne basculante destinée au ramassage, au nettoyage, au chargement et au transport de tubercules, en particulier de betteraves, disposés en andains, comprenant une unité de ramassage, de transport et de nettoyage s'étendant sous pratiquement toute la longueur de la benne ainsi qu'une unité d'élévation et de propulsion des tubercules vers l'intérieur de la dite benne faisant suite à l'unité de transport et de nettoyage.

fig.1

EP 0 335 853 A1

## Description

### Machine à benne basculante pour la moisson de tubercules.

La présente invention a pour objet une machine à benne basculante destinée au ramassage, au nettoyage, au chargement et au transport de tubercules, en particulier de betteraves, disposés en andains.

Les machines ramasseuses - nettoyeuses de betteraves connues nécessitent généralement l'emploi de plusieurs attelages ; le premier ramasse, nettoie et propulse les tubercules vers des bennes indépendantes tirées par des tracteurs qui assurent la navette vers le silo.

Il existe également des ramasseuses automotrices très coûteuses ainsi que des auto-ramasseuses mais leur benne est de capacité réduite et elles sont pourvues de mécanismes complexes et onéreux.

Dans les machines classiques, le système de nettoyage est composé de turbines dont les résultats sont souvent peu convaincants. En effet, la turbine ne nettoie que sur un trajet relativement court, (le passage à travers la turbine) et cette dernière a tendance à casser les pointes des betteraves où la teneur en sucre est la plus élevée. De plus, le tubercule n'est pas nettoyé au maximum. En effet, après avoir parcouru une distance relativement courte, il a pris la vitesse de la turbine et n'est plus que transporté. Enfin, la force centrifuge de la turbine provoque un cheminement très compacté et très étroit qui ne permet qu'une élimination partielle de la terre et des collets : on peut considérer qu'une turbine travaille sur moins de 50% de sa surface.

Une ramasseuse de betteraves est, jusqu'à présent, un lourd investissement pour l'agriculteur car il ne peut l'utiliser que pendant deux mois et demi par an, au maximum.

Mis à part les systèmes classiques, des tentatives d'amélioration ont été faites : le brevet belge de Monsieur Lucien GILLES N° 845.605, la demande de brevet européen de Monsieur LESERT (France) N° 0015843, ainsi que les prototypes et les machines brevetés par Monsieur DUTRIEUX (Belgique).

Toutes les machines connues présentent les inconvénients d'un investissement élevé, d'un nettoyage médiocre, d'un mécanisme complexe et d'une utilisation restreinte.

La présente invention remédie à ces inconvénients.

Elle est caractérisée en ce qu'elle comprend une unité de ramassage, de transport et de nettoyage s'étendant sous pratiquement toute la longueur de la benne ainsi qu'une unité d'élévation et de propulsion reprenant les tubercules fournies par l'unité de ramassage, de transport et de nettoyage pour les projeter dans la benne. L'unité d'élévation et de propulsion peut être fixée à l'arrière, sur un chassis pivotant permettant de libérer l'accès à la porte arrière de la benne et de vider cette dernière par basculement.

La fixation de ces deux unités à la benne est très simple et, après enlèvement de celles-ci, la benne peut être utilisée comme une benne classique.

Le dispositif de nettoyage comprend un tapis transporteur à lattes inférieur mobile de très grande longueur (toute la longueur de la benne) et, de préférence, un tapis de contre-pression fixe supérieur dont la longueur peut être plus courte que celle du tapis inférieur.

Le ramassage, le transport vers l'arrière et le nettoyage se font par un mécanisme unique, composé du tapis transporteur à lattes qui entraîne les tubercules sous toute la longueur de la benne.

Le dispositif de nettoyage peut être adapté au type de terrain rencontré et aux conditions de travail, cette adaptation consiste à soulever ou baisser le tapis de contre-pression supérieur.

Pendant tout le parcours, le tubercule est freiné dans sa progression par le tapis supérieur fixe qui l'oblige à pivoter sur lui-même et à se nettoyer. Un système réglable permet de monter ou de descendre ce tapis supérieur pour augmenter, autant que de besoin, l'efficacité du nettoyage.

L'unite d'élévation comprend des palettes. Elle est, de fixée à la porte mobile arrière de la benne. Elle reçoit, élève et éjecte le tubercule vers l'avant de la benne où, par exemple, un tapis de caoutchouc toilé, accroché à la paroi avant, peut servir d'amortisseur.

Grâce au fait que l'unité d'élévation est disposée dans l'axe de la benne, le chargement est toujours centré et, comme la propulsion des tubercules est dirigée vers l'avant de la benne, le chargement commence côté timon ce qui augmente l'adhérence du tracteur. De plus, la propulsion peut être réglée en réglant la vitesse de l'unité de l'élévation de manière à obtenir un chargement uniforme. Le moteur d'entraînement de l'unité d'élévation est, de préférence, un moteur hydraulique.

Lorsque la benne est pleine, le versage se fait sur silo. Pour cela, toute l'unité d'élévation se relève en même temps que la porte arrière, dégageant complètement le passage des tubercules.

Une fois la manoeuvre accomplie, la porte arrière est la benne d'avant en arrière, la vidant ainsi complètement.

Les détails sont explicités par les dessins qui décrivent, de façon non-limitative, l'invention.

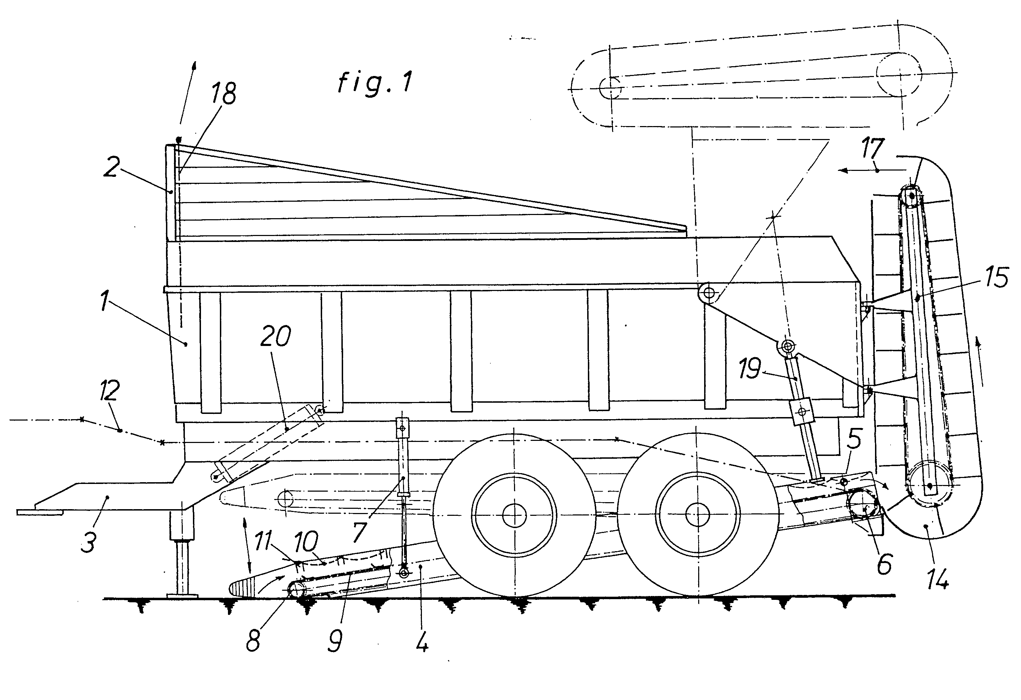

La figure N° 1 représente le profil de la machine. Cette vue d'un seul profil s'explique parce que les mécanisme seront, de préférence, fixés de façon symétrique par rapport à l'axe de la benne pour des raisons de fabrication, d'équilibre et de commodité d'accès.

La figure N° 2 représente une vue écorchée de la benne vue en plan. Il faut remarquer la forme large du transporteur qui assure la répartition de la charge. Le dessin ne reprend que le système à deux essieux ; on peut évidemment construire une machine plus légère à un seul essieu ou une plus lourde à plus de deux essieux.

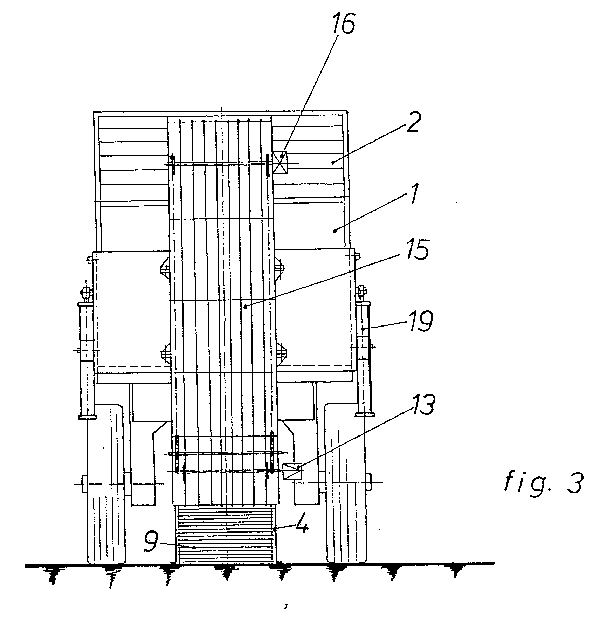

La figure N° 3 représente la vue arrière de la caisse pourvue de l'unité d'élévation et de propulsion.

La machine, selon l'invention, comporte une benne basculante 1 rehaussée, à l'avant, par une protection 2 et tirée par un timon 3.

Les deux unités transporteuses décrites ci-après sont fixées de façon amovible à la benne.

L'unité de ramassage, de nettoyage et de transport et constituée d'un chassis 4 fixé au point 5 à la tête 6 du transporteur est suspendu, à l'avant, par les vérins 7 qui guident et soulèvent le pied 8.

Cette unité est composée d'un tapis inférieur 9 et d'un tapis supérieur de contre-pression 10 réglé par fixation aux rails 11 . Ces deux tapis permettent en même temps le nettoyage et le transport, sous toute la longueur de la benne 1. La marche du tapis 9 est assurée par un arbre de transmission à cardans 12 qui entraîne un réducteur 13 fixé à la tête 6 du tansporteur.

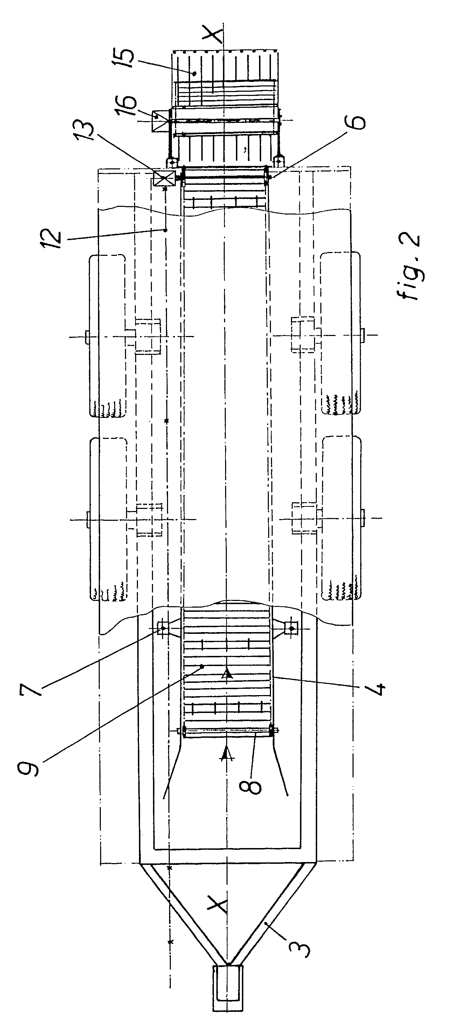

En fin de tapis, le tubercule tombe dans un bac 14 et est emporté par l'élévateur 15 qui est actionné par un moteur, de préférence hydraulique 16 (fig. 2.). Le tubercule est projeté par l'élévateur au point 17 , pour atteindre un tapis amortisseur 18 et tomber dans la benne 1.

Lorsque la benne est pleine, son chargement peut être versé sur un silo. A ce moment, lorsque les vérins 19 sont verrouillés en position haute, maintenant ainsi l'élévateur relevé, un fin de course permet d'actionner les vérins 20 pour vider la benne.

Remarquons que les unités de ramassage, de transport et de nettoyage ainsi que celles d'élévation et de propulsion sont entièrement extérieure à la benne.

## Revendications

1. Machine à benne basculante destinée au ramassage, au nettoyage, au chargement et au transport de tubercules, en particulier de betteraves, disposés en andains, comprenant une unité de ramassage, de transport et de nettoyage s'étendant sous pratiquement toute la longueur de la benne ainsi qu'une unité d'élévation et de propulsion des tubercules vers l'intérieur de la dite benne faisant suite à l'unité de transport et de nettoyage.

2. Machine selon la revendications 1. caractérisée en ce que l'unité de nettoyage consiste en un tapis inférieur mobile et un tapis supérieur immobile, réglable en hauteur qui, situé au-dessus de l'unité de transport, presse les tubercules sur le tapis inférieur et les oblige à se nettoyer sur toute la longueur de l'unité de transport.

3. Machine selon une des revendications 1 ou 2 caractérisée en ce que l'unité d'élévation et de propulsion est fixée sur un chassis pivotant permettant de libérer l'accès à la porte arrière de la benne et de vider cette dernière par basculement.

4. Machine selon la revendication 3 caractérisée en ce que l'unité d'élévation et de propulsion est solidaire de la porte arrière de la benne.

fig.1

EP 0 335 853 A1

fig. 2

fig. 3

EP 0 335 853 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| X | DE-A-2153543 (SUDDEUTSCHE ZUCKER AG) <br> * page 2, ligne 18 - page 4, ligne 8; figures 1-4 * | 1, 2, 3 | A01D51/00 <br> A01D33/10 |
| X | DE-A-3533215 (WASMEIER) <br> * colonne 4, ligne 12 - colonne 6, ligne 6; figures 1-4 * | 1, 3 | |
| A | DE-A-2153555 (HAGENGUTH) <br> * page 8 - 10; figure 4 * | 1 | |
| A | EP-A-56873 (SCHULTE) <br> * page 5, ligne 26 - page 8, ligne 16; figures 1-4 * | 1, 3 | |

DOMAINES TECHNIQUES
RECHERCHES (Int. Cl.4 )

A01D

Le présent rapport a été établi pour toutes les revendications

| Lieu de la recherche | Date d'achèvement de la recherche | Examinateur |
|---|---|---|
| LA HAYE | 15 JUIN 1989 | VERMANDER R.H. |